# EUROPÄISCHE PATENTSCHRIFT

(11) **EP 1 012 006 B1**
(45) Veröffentlichungstag und Bekanntmachung des Hinweises auf die Patenterteilung: **26.04.2006**
(21) Anmeldenummer: 98948949.7
(22) Anmeldetag: 09.09.1998
(51) Int. Cl.: B60R 21/26, F16K 17/40

(54) **ÖFFNUNGSVORRICHTUNG FÜR DEN GASDRUCKBEHÄLTER EINES AIRBAGS**
OPENING DEVICE FOR THE GAS PRESSURE CONTAINER OF AN AIRBAG
DISPOSITIF D'OUVERTURE POUR LE RESERVOIR DE PRESSION GAZEUSE D'UN AIRBAG

(30) Priorität: 09.09.1997 DE 19739375
(43) Veröffentlichungstag der Anmeldung: 28.06.2000
(73) Patentinhaber: Welz Industrieprodukte GmbH, 70736 Fellbach (DE)
(72) Erfinder: MÖLLER, Tilo, D-78727 Oberndorf (DE)
(74) Vertreter: Wasmuth, Rolf
(86) Internationale Anmeldenummer: PCT/EP1998/005755
(87) Internationale Veröffentlichungsnummer: WO 1999/012775

(56) Entgegenhaltungen:
- DE-A- 19 533 293
- DE-A- 19 540 618
- DE-U- 29 714 433
- GB-A- 2 309 511
- US-A- 3 837 671
- US-A- 4 275 901

## Beschreibung

Die Erfindung betrifft eine Aufblasvorrichtung für einen Airbag nach dem Oberbegriff des Anspruchs 1.

Eine derartige Aufblasvorrichtung ist aus der DE 195 40 618 A1 bekannt. Die Ausströmöffnung des Druckbehälters ist mit einem Dichtelement verschlossen, welches zur Abstützung der Gaskräfte über ein Druckstück an einem gehäusefesten Widerlager abgestützt ist. Dem Druckstück ist eine pyrotechnische Ladung zugeordnet, bei deren Zündung das Widerlager zerstört und somit die Abstützung des Dichtelementes aufgehoben wird. Das Dichtelement wird nun allein durch den Gasdruck im Behälter zerstört und der an das Gehäuse angeschlossene Airbag durch das ausströmende Gas aufgeblasen.

Aus der DE 197 27 047 ist bekannt, den Gasdruckspeicher mit einem Inertgas, z.B. wenigstens ein Gas aus der Gruppe Stickstoff, Argon und Helium zu füllen. Die so gefüllten Gasdruckbehälter werden von einer Berstscheibe verschlossen, die mit dem Gasdruckbehälter verschweißt ist und durch den Explosionsdruck einer pyrotechnischen Ladung geöffnet wird. Auch die US 3,723,205 gibt verschiedene Gase wie Helium zur Befüllung eines Gasdruckspeichers für einen Airbag an.

Die DE 297 14 433 U1 zeigt eine Aufblasvorrichtung für einen Airbag mit einem Gasdruckbehälter und einer Öffnungsvorrichtung. Der Gasdruckbehälter ist in einen größeren Raum und einen kleineren Raum aufgeteilt. Eine zwischenliegende Durchströmungsöffnung ist mittels einer Verschlußplatte verschlossen, während eine dazu parallel geschaltete Ausgleichsöffnung einen statischen Druckausgleich zwischen beiden Teilräumen ermöglicht. Eine aus dem kleineren Raum herausführende Ausströmöffnung ist durch eine Verschlußfolie abgedichtet. Beim Auslösen der Aufblasvorrichtung sprengt der Innendruck der kleineren Kammer zunächst die Membran der Ausströmöffnung auf, infolge dessen zunächst die im kleineren Raum bevorratete Teilmenge des Gases in den Airbag strömt. Die kleine, für den statischen Druckausgleich zwischen beiden Kammern angeordnete Ausgleichsöffnung erzeugt eine kurzzeitige Druckdifferenz an der Verschlußplatte, die in dessen Folge aufgesprengt wird. Auch das Gas aus dem größeren Teilraum kann ungedrosselt ausströmen. Ein dadurch bewirktes ungedrosseltes, jedoch kaskadenartiges Ausströmen des gesamten Behälterinhalts soll ein allzu schlagartiges Aufblasen des Airbags verhindern.

Die befüllten Gasdruckbehälter werden von Zulieferern hergestellt und an Endabnehmer versandt. Die versandfertigen Gasdruckbehälter enthalten betriebsbereite Öffnungsvorrichtungen mit jeweils pyrotechnischer Ladung, weshalb bei der Herstellung, dem Versand und der Endmontage eine vorsichtige Handhabung notwendig ist, um ein unbeabsichtigtes Auslösen der Öffnungsvorrichtung zu vermeiden.

Darüber hinaus wurde festgestellt, daß das im Gasdruckbehälter gespeicherte Gas in einer bestimmten Mischung vorliegen muß, um ein rasches ordnungsgemäßes Aufblasen des Airbags ohne mechanische Schädigung zu gewährleisten.

Der Erfindung liegt die Aufgabe zugrunde, eine gattungsgemäße Vorrichtung derart weiterzubilden, daß eine schlagartige Öffnung des Airbags ohne mechanische Beschädigung durch den Aufblasvorgang sichergestellt ist.

Die Aufgabe wird erfindungsgemäß durch die Merkmale des Anspruchs 1 gelöst.

Eine Drossel ist in Abströmrichtung der Gase vor der Ausströmöffnung des Gasdruckbehälters vorgesehen, wobei der Öffnungsquerschnitt der Ausströmöffnung größer als der der Drossel ist. Zwischen der Drossel und der Ausströmöffnung ist ein Druckraum ausgebildet. Dadurch ist zweierlei erreicht. Zunächst kann die Ausströmöffnung im Durchmesser groß ausgebildet sein, wodurch der im Gasdruckbehälter und im Druckraum herrschende Gasdruck auf eine entsprechend große Fläche wirkt und große Öffnungskräfte zur Verfügung stehen, die bei Entfall des Druckstückes ein explosionsartiges Öffnen des Druckbehälters gewährleisten. Die Ausströmgeschwindigkeit des Gases ist hingegen durch die Drossel bestimmt, die entsprechend der Gasfüllung gewählt und bei der Fertigung des Behälters fest eingebaut wird. Der Druckbehälter ist überwiegend mit einem Edelgas, insbesondere Helium oder einer Heliummischung, befüllt, wobei durch die vorgeschaltete Drossel die Ausströmgeschwindigkeit des Gases aus der Ausströmöffnung konstruktiv vorgegeben ist. Helium hat eine geringe Temperaturabhängigkeit und aufgrund des geringeren Molekulargewichtes eine hohe Strömgeschwindigkeit, die mit der Drossel an den zu füllenden Airbag anpaßbar ist.

In Weiterbildung der Erfindung ist die Auslöseeinrichtung als vom Gehäuse getrennte, selbständig montierbare Einheit ausgeführt. Da die Abstützung des Dichtelementes unabhängig von der Auslöseeinrichtung stabil ist, kann die Vormontage der Öffnungsvorrichtung mit dem Gasdruckbehälter ohne Auslöseeinrichtung erfolgen. Das Gehäuse bleibt zweckmäßig auf gegenüberliegenden Seiten offen, so daß bei einem unbeabsichtigten Öffnen des Dichtelements das unter Druck stehende Gas auf gegenüberliegenden Seiten gleicher Öffnungsfläche ausströmt und somit nur schubneutrale Reaktionskräfte auftreten. Daher wird sich der Gasdruckbehälter kaum oder gar nicht bewegen, so daß bei der Vormontage, dem Versand und der Endmontage ohne zusätzlichen Aufwand eine hohe Sicherheit erzielt ist. Die Auslöseeinrichtung wird getrennt von der Öffnungsvorrichtung und dem Gasdruckbehälter vormontiert. Erst bei der Endmontage wird die Öffnungsvorrichtung für den Gasdruckbehälter mit der Auslöseeinrichtung versehen und die Gesamtanordnung betriebsbereit gemacht. Dann aber ist der Gasdruckbehälter fest montiert, so daß die auftretenden Schubkräfte der ausströmenden Gase abgefangen sind.

Bevorzugt ist das Gehäuse aus einem mit dem Druckbehälter verbundenen Grundkörper mit offenen Stirnseiten ausgebildet, die durch Stirnplatten verschließbar sind. Dabei kann der Grundkörper für den Versand mit vorläufigen Stirnplatten verschlossen werden, die beide eine gleich große Ausströmungsöffnung aufweisen. Eine Beschädigung der Öffnungsvorrichtung im Gehäuse kann so sicher vermieden werden. Erst bei der Endmontage wird die in einer Stirnplatte montierte Auslöseeinrichtung am Grundkörper angebracht, wobei kann die der Auslöseeinrichtung gegenüberliegende Stirnplatte die notwendigen Abströmöffnungen für das Füllgas des Airbags aufweist; zweckmäßig ist der Airbag an dieser Stirnplatte befestigt.

Um eine lagerichtige Montage der Auslöseeinrichtung zu gewährleisten, greift der offene Rand der Stirnseite des Grundkörpers in eine Aufnahmenut der Stirnplatte ein.

Weitere Merkmale der Erfindung ergeben sich aus den weiteren Ansprüchen, der Beschreibung und der Zeichnung, in der nachfolgend im einzelnen beschriebene Ausführungsbeispiele der Erfindung dargestellt sind. Es zeigen:
- Fig. 1: eine perspektivische Darstellung eines Gasdruckbehälters mit einer an einem Ende angeordneten Öffnungsvorrichtung,
- Fig. 2: eine perspektivische Darstellung gemäß Fig. 1 mit dem geöffneten Gehäuse der öffnungsvorrichtung,
- Fig. 3: im Schnitt eine schematische Darstellung einer ersten Ausführungsform der öffnungsvorrichtung mit pyrotechnischer Auslöseeinrichtung,
- Fig. 4: in schematischer Darstellung eine zweite Ausführungsform der Öffnungsvorrichtung mit thermoelektrischer Auslöseeinrichtung,
- Fig. 5: in schematischer Darstellung eine andere Grundform eines Gasdruckbehälters mit einer doppelt wirkenden Öffnungsvorrichtung mit elektrischer Auslöseeinrichtung,
- Fig. 6: eine Darstellung eines Gasdruckbehälters nach Fig. 5 mit pyrotechnischer Auslöseeinrichtung,
- Fig. 7: einen Teilschnitt durch einen Gasdruckbehälter mit einer Drossel,
- Fig. 8: einen Teilschnitt durch einen Gasdruckbehälter mit einer der Ausblasöffnung gegenüberliegenden Stirnkappe,
- Fig. 9: einen Radialschnitt durch die Auslöseeinrichtung nach Fig. 8.

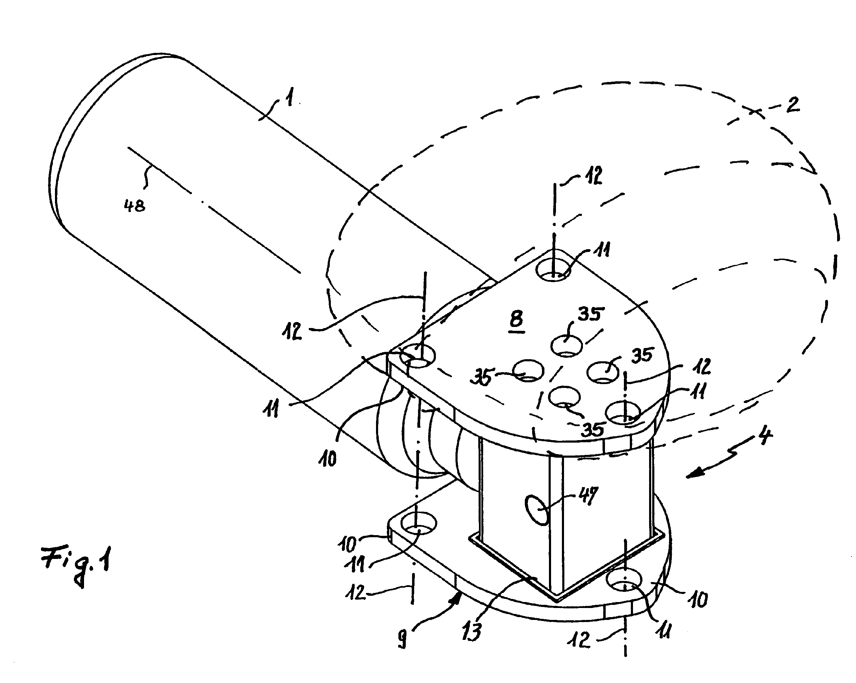

Der in Fig. 1 dargestellte Gasdruckbehälter 1 dient dem Aufblasen eines Airbags 2, wie er z.B. in Kraftfahrzeugen verwendet wird.

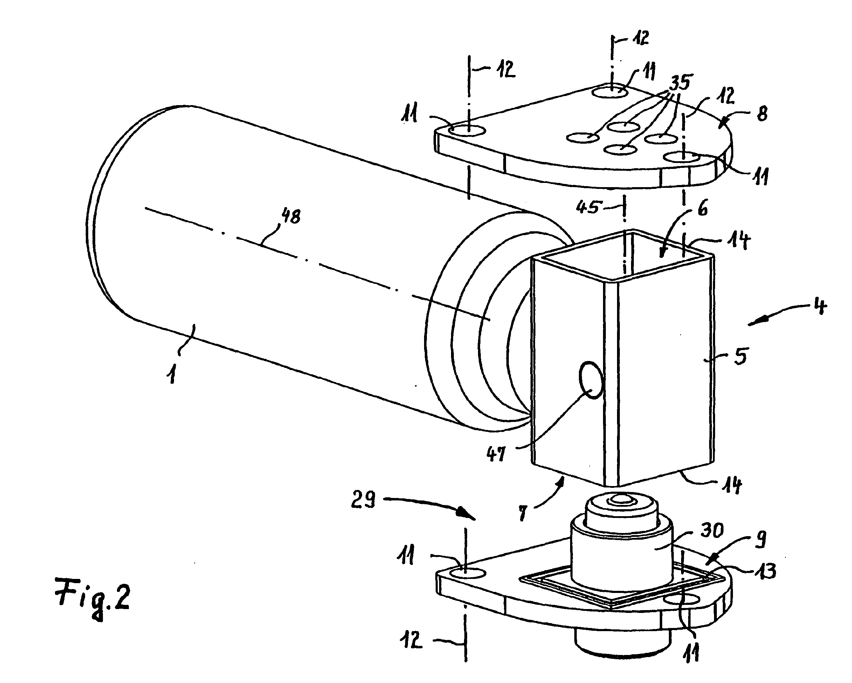

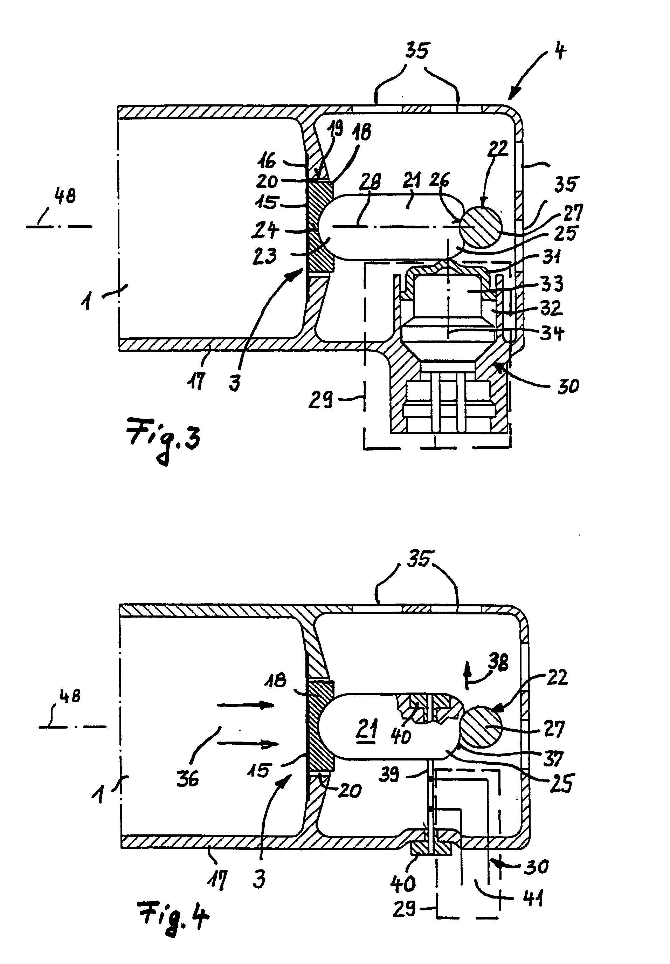

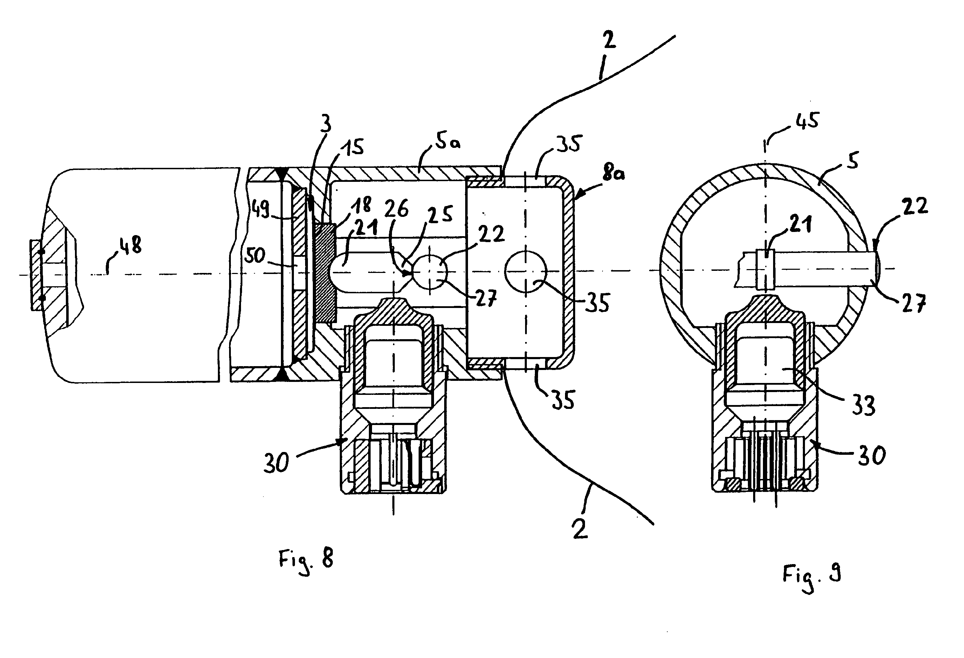

Wie im weiteren den Fig. 2 und 3 zu entnehmen, schließt an die zentrale Ausströmöffnung 3 des Druckbehälters 1 ein Gehäuse 4 an, welches mit dem Behälter 1 fest verbunden ist. Die Ausströmöffnung 3 liegt bevorzugt koaxial zur Mittellängsachse 48 des Behälters 1. Ein genauer Aufbau des Gehäuses 4 geht aus den Fig. 1, 2 und 7 hervor, während die Fig. 3 bis 6 das Gehäuse 4 nur schematisch wiedergeben und die Fig. 8 und 9 ein alternatives Gehäuse zeigen.

Das Gehäuse 4 besteht - wie insbesondere Fig. 2 zeigt - aus einem hohlen Grundkörper 5 mit einander gegenüberliegenden, offenen Stirnseiten 6 und 7, die durch Stirnplatten 8 und 9 zu verschließen sind. Ausweislich Fig. 1 sind die Stirnplatten 8 und 9 größer als die Stirnseiten 6 und 7 ausgebildet, so daß die Stirnplatten 8 und 9 das Grundgehäuse 5 überragen. In den überragenden Abschnitten 10 sind Durchgangsbohrungen 11 zur Anordnung von Zugankern 12 vorgesehen. Die Stirnplatten 8 und 9 sind von der Größe her zweckmäßig gleich ausgebildet, so daß die Durchgangsbohrungen 11 der einander gegenüberliegenden Stirnplatten 8 und 9 deckungsgleich zueinander liegen und die Anordnung der jeweiligen Zuganker 12 erlauben. Um eine lagerichtige Montage der Stirnplatten am Grundkörper 4 zu gewährleisten, ist vorgesehen, auf der dem Grundkörper 5 zugewandten Seite der Stirnplatten 8 und 9 eine Aufnahmenut 13 für den Rand 14 der offenen Stirnseiten 6 und 7 auszubilden. Bei der die Stirnseiten 6 und 7 verschließenden Montage der Stirnplatten 8 und 9 greift der Rand 14 des Grundkörpers 5 in die Aufnahmenut 13 der jeweiligen Stirnplatte ein und gewährleistet so deren lagerichtige Montage am Grundkörper 5. Durch diese Anordnung ist auch die fluchtgenaue Lage der Durchgangsbohrungen 11 zueinander für die Montage der Zuganker 12 sichergestellt; über den Umfang der Stirnplatten 8, 9 sind drei Zuganker 12 vorgesehen. Ein Zuganker 12 schneidet etwa die Mittellängsachse 48 des Druckbehälters 1 in Verlängerung des Druckstückes oberhalb der Offnungsvorrichtung. Die beiden weiteren Zuganker 12 liegen dem Hals des Druckbehälters 1 benachbart rechts und links neben dem Gehäuse 4. Alle drei Zuganker 12 liegen parallel zur Längsmittelachse 45 des Gehäuses 4, die senkrecht zu den Stirnplatten 8 und 9 ist.

Die Ausströmöffnung 3 des Gasdruckbehälters 1 mündet etwa zentral in das Gehäuse 4 bzw. dessen Grundkörper 5 ein, der im gezeigten Ausführungsbeispiel im Querschnitt quadratisch ausgeführt ist. Andere Querschnittsformen des Grundgehäuses 5 können vorteilhaft sein (Fig. 8). Um bei demontierten Stirnplatten 8 und 9 Schubneutralität zu erhalten, ist das Gehäuse 4 bzw. das Grundgehäuse 5 auf gegenüberliegenden Seiten 6, 7 offen. Die offenen Seiten 6, 7 haben bevorzugt gleiche Fläche; die Mittelsenkrechte jeder Stirnseite 6, 7 liegt gleichachsig mit der Längsmittelachse 45 des Grundkörpers 5 bzw. des Gehäuses 4. Die Mittellängsachse 48 des Druckbehälters 1 schneidet die Längsmittelachse 45 des Gehäuses 4 rechtwinklig.

Die Ausströmöffnung 3 ist durch ein Dichtelement 15 verschlossen, welches im gezeigten Ausführungsbeispiel als dünne Folie ausgebildet ist und auf der dem Gehäuse 4 abgewandten Seite der Ausströmöffnung 3 im Druckbehälter 1 montiert ist. Bevorzugt ist das Dichtelement 15 im Bereich des Folienrandes 16 druckdicht mit dem Behältergehäuse 17 verbunden. Abhängig von dem Material der Folie kann deren Rand 16 mit dem Behältergehäuse 17 verschweißt oder verklebt sein.

Das Dichtelement 15 liegt auf der dem Gehäuse 4 zugewandten Seite an einer Stützscheibe 18 an, welche in der Ausströmöffnung 3 plaziert ist. Dabei liegt die Stützscheibe 18 mit radialem Spiel zum Rand 19 der Ausströmöffnung 3, wodurch ein Ringspalt 20 gebildet ist, welcher durch das Dichtelement 15 behälterseitig verschlossen ist. Dieser Ringspalt 20 bildet ein überdruckventil; die Auslegung des Ringspaltes in Verbindung mit dem Material des Dichtelementes 15 ist so getroffen, daß bei einem vorgebbaren Grenzdruck das Dichtelement 15 im Bereich des Ringspaltes aufbricht, so daß der Überdruck kontrolliert über den Ringspalt 20 abgeblasen wird, ohne daß die Ausströmöffnung 3 selbst geöffnet ist. Fig. 8 und 9 zeigen einen Gasdruckbehälter ohne Ringspalt.

Die Stützscheibe 18 wird über ein Druckstück 21 an einem gehäusefesten Widerlager 22 abgestützt, so daß die durch den Gasdruck im Behälter 1 auf das Dichtelement 15 wirkenden Offnungskräfte sicher abgefangen sind. Das Druckstück 21 liegt dabei mit einem kugelkopfförmigen Ende 23 in einem entsprechend konkaven Lager 24 der Stützscheibe 18, während das andere Ende 25 des Druckstückes 21 eine leicht konkave Rastvertiefung 26 aufweist, mit der das Druckstück leicht verrastend an einem das Widerlager 22 bildenden Bolzen 27 anliegt. Der Bolzen 27 ist in gegenüberliegenden Bohrungen 47 des Grundkörpers 5 gehalten. Die Längsachse 28 des Druckstückes 21 liegt dabei senkrecht zur Stützscheibe 18 bzw. dem Dichtelement 15, geht bevorzugt durch die Achse des Bolzens 27 und liegt gleichachsig zur Mittellängsachse 48 des Behälters 1.

Quer zur Längsachse 28 des länglichen, bevorzugt zylindrischen Druckstückes 21 ist eine Auslöseeinrichtung 30 angeordnet, die - wie Fig. 2 zeigt - in einer Stirnplatte 9 des Gehäuses montiert ist. Die Auslöseeinrichtung 30 bildet zusammen mit der Stirnplatte 9 eine vom Gehäuse 4 getrennte, selbständig montierbare Einheit 29.

Die Auslöseeinrichtung 30 besteht im wesentlichen aus einem Betätigungskolben 31, der quer zur Längsachse 28 in einem entsprechenden Zylinder 32 verschiebbar geführt ist, wobei im Zylinder 32 eine pyrotechnische Ladung 33 angeordnet ist, die in bekannter Weise elektrisch zu zünden ist. Der Betätigungskolben 31 liegt nahe dem Widerlagerbolzen 27 im Bereich des Endes 25 am Druckstück 21 an, wobei die Längsachse 34 des Zylinders 32 bevorzugt rechtwinklig zur Längsachse 28 des Druckstückes 21 liegt.

Die Fig. 3 bis 6 zeigen verschiedene Ausführungsbeispiele einer Öffnungsvorrichtung als allgemeine Hintergrundinformation zur vorliegenden Erfindung.

Wie aus Fig. 3 zu erkennen, ist die Abstützung des Dichtelementes 15 über die Stützscheibe 18, das Druckstück 21 und das Widerlager 22 unabhängig von der Auslöseeinrichtung 30 stabil, wozu auch die Rastvertiefung 26 beiträgt. Der Gasdruckbehälter 1 kann daher ohne Anordnung der Auslöseeinrichtung 30 betriebsfertig vormontiert und befüllt werden, ohne daß die pyrotechnische Zündladung 33 angeordnet ist. Dies hat bei der Vormontage, beim Versand und bei der Endmontage Vorteile. Erst bei der Endmontage wird die Stirnplatte 9 mit der Auslöseeinrichtung 30, die die pyrotechnische Ladung 33 enthält, in der bereits beschriebenen Weise an dem Grundgehäuse 5 festgelegt, wobei die auf der anderen Stirnseite 6 angeordnete Stirnplatte 8 Abströmöffnungen 35 aufweist, über die der bevorzugt an der Stirnplatte 8 befestigte Airbag 2 aufgeblasen wird.

Im Ausführungsbeispiel nach Fig. 4 ist anstelle der pyrotechnischen Ladung 33 eine rein elektrisch bzw. thermoelektrisch arbeitende Auslöseeinrichtung 30 vorgesehen. In Abweichung der in Fig. 3 beschriebenen Abstützung ist das dem Bolzen 27 zugewandte Ende 25 des Druckstückes 21 abgeschrägt ausgebildet, so daß die in Pfeilrichtung 36 auf das Druckstück 21 wirkenden Kräfte aufgrund der schiefen Ebene 37 am Ende 25 des Druckstückes 21 eine resultierende Kraft 38 auftritt, welche bestrebt ist, das Druckstück 21 vom Widerlager 22 zu lösen. Die resultierende Kraft 38 wird durch einen elektrisch leitenden, mechanisch belastbaren Draht 39 abgefangen, wobei der Draht 39 mit dem einen Ende über ein Isolierstück 40 im Druckstück 21 und mit dem anderen Ende über ein weiteres Isolierstück 40 im Gehäuse 4 festliegt. An den Draht 39 sind Anschlußkabel 41 der Auslöseeinrichtung angelötet, über die in Bruchteilen von Sekunden der Draht 39 durch einen hohen Strom aufgeheizt und somit thermisch geschwächt wird, so daß unter der resultierenden Kraft 38 der Draht 39 reißt, das Druckstück 21 mit seinem Ende 25 vom Widerlager 22 abgleitet und die Abstützung des Dichtelementes 15 aufgehoben ist, so daß der Gasdruck im Behälter 1 das Dichtelement 15 schlagartig öffnet und über die Abströmöffnungen 35 ein Befüllen des Airbags 2 bewirkt ist. Es kann zweckmäßig sein, die elektrische Auslöseeinrichtung 30 entsprechend der pyrotechnischen Auslöseeinrichtung 30 in Fig. 3 als vom Gehäuse getrennte, selbständig montierbare Einheit auszubilden.

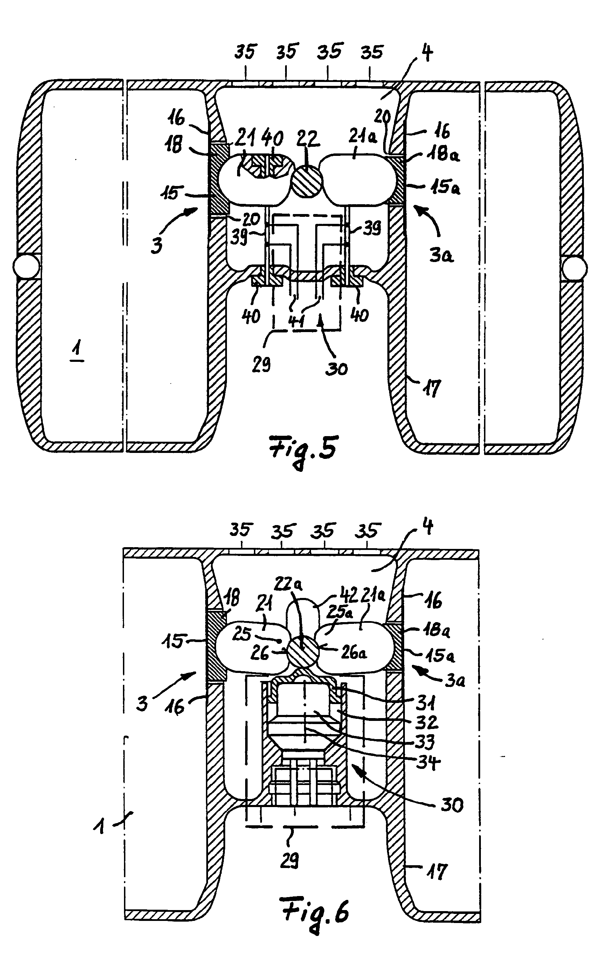

Das Ausführungsbeispiel nach Fig. 5 entspricht vom Prinzip der der Auslöseeinrichtung 30 der in Fig. 4 beschriebenen elektrischen Auslöseeinrichtung, weshalb für gleiche Teile gleiche Bezugszeichen verwendet sind. Der Druckgasbehälter 1 ist im Ausführungsbeispiel nach Fig. 5 aus zwei runden, getrennten Einzelbehältern gebildet, in dessen Zentrum das Gehäuse 4 vorgesehen ist. Der torusförmige Ring hat zwei Ausströmöffnungen 3 und 3a, wobei die Ausströmöffnung 3a kleiner ausgeführt ist als die Ausströmöffnung 3. Die angeordneten Dichtelemente 15 bzw. 15a sind in gleicher Weise über eine Stützscheibe 18 bzw. 18a und ein Druckstück 21 bzw. 21a an einem gemeinsamen Widerlager 22 abgestützt. Für jede Abstützung ist ein getrennter Haltedraht 39 vorgesehen, so daß die Ausströmöffnungen 3, 3a zeitlich versetzt zueinander geöffnet werden können. Um eine günstige Aufblascharakteristik des Airbags 2 zu erhalten, wird vorteilhaft zunächst die Ausströmöffnung 3a des einen Behälters geöffnet, um dann - zeitlich versetzt - die größere Ausströmöffnung 3 des anderen Behälters zum endgültigen Aufblasen des Airbags zu öffnen.

Das Ausführungsbeispiel nach Fig. 6 entspricht im Prinzip dem nach Fig. 5; für gleiche Teile sind gleiche Bezugszeichen verwendet.

Die beiden Druckstücke 21 und 21a sind an einem gemeinsamen Widerlager 22 angeordnet, wobei ohne Anordnung der pyrotechnischen Auslöseeinrichtung 30 die Abstützung der jeweiligen Dichtelemente 15 und 15a entsprechend einer Kniehebelanordnung stabil ist. Die Enden 25 bzw. 25a der Druckstücke 21, 21a weisen Rastvertiefungen 26, 26a auf, wie sie in Verbindung mit dem Ausführungsbeispiel nach Fig. 3 beschrieben sind. Das Widerlager 22a ist in einem Längsschlitz 42 des Gehäuses 4 verschiebbar gehalten, wobei der Betätigungskolben 31 der pyrotechnischen Auslöseeinrichtung 30 am Widerlager 22a angreift. Im Auslösefall schiebt der Kolben das Widerlager 22a über den Totpunkt der Kniehebelanordnung aus der gezeigten stabilen Lage hinaus, wodurch die Abstützung der jeweiligen Dichtelemente 15 und 15a aufgehoben und ein Öffnen der Ausströmöffnungen 3 und 3a bewirkt ist.

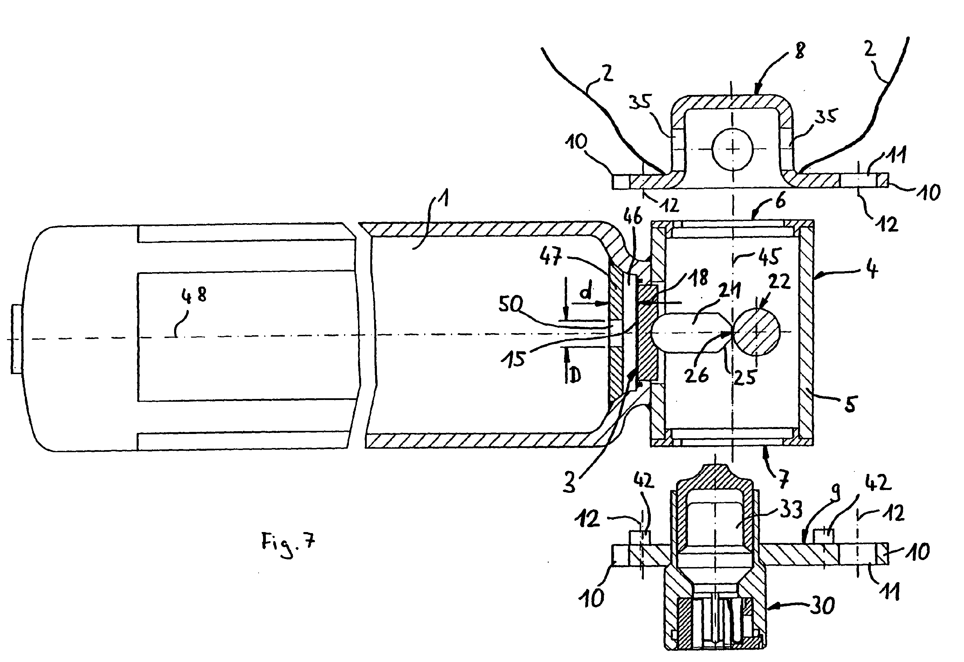

Das erfindungsgemäße Ausführungsbeispiel nach Fig. 7 entspricht im Aufbau dem nach Fig. 2; gleiche Teile tragen gleiche Bezugszeichen. Der das Gehäuse 4 bildende Grundkörper 5 ist mit dem Hals des Druckbehälters 1 verschweißt und weist einander gegenüberliegende offene Stirnseiten 6 und 7 auf. Die Stirnplatte 9 weist Zentrierstifte 42 auf. Die Stützscheibe 18 liegt mit nur geringem Spiel in der Ausströmöffnung 3, so daß als Dichtelement 15 eine wenig druckstabile Folie verwendbar ist. Aufgrund des geringen Spiels der Stützscheibe 18 in der Öffnung ist die Folie über weitgehend den gesamten Öffnungsquerschnitt der Ausströmöffnung abgestützt.

Der Öffnungsquerschnitt, z.B. der Durchmesser der Ausströmöffnung 3, wird so groß gewählt, daß der Gasdruck eine große Öffnungskraft auf die Stützscheibe 18 bewirkt, so daß im Auslösefall beim Wegschlagen des Druckstückes 21 ein sofortiges, explosionsartiges öffnen der Ausströmöffnung 3 sichergestellt ist.

Vorteilhaft ist der Druckbehälter mit einer Heliummischung, insbesondere aber überwiegend mit Helium oder einem anderen geeigneten Edelgas gefüllt, das eine geringe Temperaturabhängigkeit und bei gleichem Speicherdruck eine hohe Ausblasgeschwindigkeit aufweist, was vorteilhaft zu sehr kurzen Aufblaszeiten des Airbags genutzt werden kann.

Um eine mechanische Beschädigung des Airbags sicher auszuschließen, wird im Druckbehälter 1 in Ausströmrichtung des Gases vor der Ausströmöffnung 3 eine Drossel 49 vorgesehen. Im gezeigten Ausführungsbeispiel ist die Drossel 49 als Lochblende ausgeführt, wobei die Drosselplatte 47 an ihrem Außenrand in etwa, vorzugsweise vollständig, gasdicht mit der Behälterwand verschweißt ist. Die Drosselöffnung 50 liegt zweckmäßig symmetrisch zur Mittellängsachse 48 des Behältergehäuses 17 und insbesondere in Flucht zur Ausblasöffnung 3. Dabei ist der Öffnungsquerschnitt der Ausströmöffnung 3 größer, insbesondere um ein Mehrfaches größer als der Öffnungsquerschnitt der Drosselöffnung 50. Im Ausführungsbeispiel ist ein Verhältnis von etwa 3:1 gewählt, vorteilhaft ist ein Verhältnis von etwa 8:1.

Die Drosselplatte 47 liegt etwa im Bereich des Einzuges zum Flaschenhals mit Abstand d etwa parallel zum Dichtelement 15 bzw. der Stützplatte 18, so daß im Flaschenhals zwischen dem Dichtelement 15 und der Drosselplatte 48 ein Druckraum 46 ausgebildet ist, in dem der gleiche statische Druck herrscht wie im übrigen Behältergehäuse 17. Nach dem Öffnen der Ausströmöffnung fällt der Druck ab und ist dann bestimmt durch die über die Drosselöffnung 50 nachströmenden Gase. Der Abstand d entspricht etwa dem halben Durchmesser D der Drosselöffnung 50.

Zweckmäßig ist die die Abströmöffnungen 35 aufweisende Stirnplatte 8 mit einer napfartigen Vertiefung versehen, die als Dom in den Airbag einragt und dessen sichere Befestigung ermöglicht.

Im erfindungsgemäßen Ausführungsbeispiel nach den Fig. 8 und 9 ist der Flaschenhals mit der Drosselplatte 47 und der Ausströmöffnung 3 sowie dem Dichtelement 15 zusammen mit dem Grundgehäuse 5 als ein Rohrabschnitt ausgeführt, der an der einen offenen Stirnseite mit einem Druckbehälter 1 verschweißt und an der anderen offenen Stirnseite mit einer ein- oder aufschraubbaren Kappe 8a verschlossen ist, die die Abströmöffnungen 35 aufweist und domartig in den Airbag einragt. Die Auslöseeinrichtung 30 wird als Bauteil in die zylindrische Wand des Rohrabschnittes quer zur Mittellängsachse 48 eingeschraubt (Fig. 9), womit die Öffnungsvorrichtung vollständig ist.

## Patentansprüche

1. Aufblasvorrichtung für einen Airbag (2), umfassend einen Gasdruckbehälter (1) und eine Öffnungsvorrichtung für den Gasdruckbehälter (1), mit einem an die Ausströmöffnung (3) des Gasdruckbehälters (1) anschließenden Gehäuse (4), welches mit dem Gasdruckbehälter (1) fest verbunden ist, mit einem die Ausströmöffnung (3) verschließenden Dichtelement (15), welches über ein Druckstück (21) an einem Widerlager (22) gegen die durch den Gasdruck im Gasdruckbehälter (1) auf das Dichtelement (15) wirkenden Öffnungskräfte abgestützt ist, und mit einer Auslöseeinrichtung (30), welche im Auslösefall die Abstützung des Dichtelementes (15) aufhebt, so daß die Ausströmöffnung (3) durch den Gasdruck im Gasdruckbehälter (1) geöffnet und der Airbag (2) aufgeblasen wird, wobei die Abstützung des Dichtelementes (15) unabhängig von der Auslöseeinrichtung (30) stabil ist,
**dadurch gekennzeichnet, daß** der Gasdruckbehälter (1) überwiegend mit einem Edelgas gefüllt ist und in Ausströmrichtung der Gase vor der Ausströmöffnung (3) eine die Ausströmgeschwindigkeit des Gases aus der Ausströmöffnung (3) bestimmende Drossel (49) angeordnet ist, wobei der Öffnungsquerschnitt der Ausströmöffnung (3) größer als der der Drossel (49) ist und daß zwischen der Drossel (49) und der Ausströmöffnung (3) ein Druckraum (46) ausgebildet ist.

2. Vorrichtung nach Anspruch 1,
**dadurch gekennzeichnet, daß** der Gasdruckbehälter (1) mit Helium, gefüllt ist.

3. Vorrichtung nach Anspruch 1 oder 2,
**dadurch gekennzeichnet, daß** der Öffnungsquerschnitt der Ausströmöffnung (3) mehrfach größer als der der Drossel (49) ist.

4. Vorrichtung nach einem der Ansprüche 1 bis 3,
**dadurch gekennzeichnet, daß** der Öffnungsquerschnitt der Drossel (49) axialsymmetrisch im Gasdruckbehälter (1) angeordnet ist.

5. Vorrichtung nach einem der Ansprüche 1 bis 4,
**dadurch gekennzeichnet, daß** die Drossel (49) eine Lochblende ist.

## Claims

1. Inflating device for an airbag (2), comprising a gas pressure cylinder (1) and an opening device for the gas pressure cylinder (1), with a housing (4) adjoining the discharge port (3) of the gas pressure cylinder (1) and permanently connected to the gas pressure cylinder (1), with a sealing element (15) sealing the discharge port (3) and supported via a pad (21) on an abutment (22) against the opening forces acting on the sealing element (15) owing to the gas pressure in the gas pressure cylinder (1), and with a triggering device (30) cancelling the support of the sealing element (15) if the airbag is triggered, so that the discharge port (3) is opened by the gas pressure in the gas pressure cylinder (1) and the airbag (2) is inflated, the support of the sealing element (15) being stable independent of the triggering device (30),
**characterised in that** the gas pressure cylinder (1) is largely filled with an inert gas, and **in that** a restrictor (49) determining the discharge velocity of the gas from the discharge port (3) is located upstream of the discharge port (3) in the direction of gas flow, the opening cross-section of the discharge port (3) being larger than that of the restrictor (49), and **in that** a pressure chamber (46) is formed between the restrictor (49) and the discharge port (3).

2. Device according to claim 1,
**characterised in that** the gas pressure cylinder (1) is filled with helium.

3. Device according to claim 1 or 2,
**characterised in that** the opening cross-section of the discharge port (3) is a multiple of that of the restrictor (49)

4. Device according to any of claims 1 to 3,
**characterised in that** the opening cross-section of the restrictor is arranged to be axially symmetrical in the gas pressure cylinder (1).

5. Device according to any of claims 1 to 4,
**characterised in that** the restrictor (49) is an orifice plate.

## Revendications

1. Dispositif gonflable pour un airbag (2), comprenant un réservoir de pression de gaz (1) et un dispositif d'ouverture pour le réservoir de pression de gaz (1), avec un boîtier (4) se raccordant à l'orifice d'évacuation (3) du réservoir de pression de gaz (1), lequel est relié de façon fixe au réservoir de pression de gaz (1), avec un élément d'étanchéité (15) fermant l'orifice d'écoulement (3), lequel est soutenu au moyen d'une pièce de pression (21) sur une butée (22) contre les forces d'ouverture agissant par la pression de gaz dans le réservoir de pression de gaz (1) sur l'élément d'étanchéité (15), et avec un dispositif de déclenchement (30), qui annule le soutien de l'élément d'étanchéité (15) en cas de déclenchement, de sorte que l'orifice d'écoulement (3) est ouvert par la pression de gaz dans le réservoir de pression de gaz (1) et l'airbag (2) est gonflé, le soutien de l'élément d'étanchéité (15) étant stable indépendamment du dispositif de déclenchement (30), **caractérisé en ce que** le réservoir de pression de gaz (1) est rempli principalement avec un gaz rare et un clapet d'étranglement (49) déterminant la vitesse d'écoulement du gaz à la sortie de l'orifice d'évacuation (3) est disposé dans le sens d'évacuation des gaz avant l'orifice d'évacuation (3), la section d'ouverture de l'orifice d'évacuation (3) étant supérieure à celle du clapet d'étranglement (49) et **en ce qu'**un espace de pression (46) est formé entre le clapet d'étranglement (49) et l'orifice d'évacuation (3).

2. Dispositif selon la revendication 1, **caractérisé en ce que** le réservoir de pression de gaz (1) est rempli d'hélium.

3. Dispositif selon la revendication 1 ou 2, **caractérisé en ce que** la section d'ouverture de l'orifice d'évacuation (3) est plusieurs fois supérieure à celle du clapet d'étranglement (49) .

4. Dispositif selon l'une quelconque des revendications 1 à 3, **caractérisé en ce que** la section d'ouverture du clapet d'étranglement (49) est disposée avec une symétrie axiale dans le réservoir de pression de gaz (1).

5. Dispositif selon l'une quelconque des revendications 1 à 4, **caractérisé en ce que** le clapet d'étranglement (49) est un diaphragme à trou.
